# EUROPÄISCHE PATENTANMELDUNG

(11) **EP 0 997 193 A1**
(43) Veröffentlichungstag der Anmeldung: **03.05.2000**
(21) Anmeldenummer: 99116664.6
(22) Anmeldetag: 26.08.1999
(51) Int. Cl.: B01J 35/10, B01J 21/12, B01J 21/06, B01J 21/08, C04B 35/16, B01J 37/00, B01J 27/16, B01J 27/188, C07C 29/04

(54) **Formkörper, bestehend aus pyrogenem Mischoxid und deren Verwendung**

(30) Priorität: 24.09.1998 DE 19843845
(71) Anmelder: Degussa-Hüls Aktiengesellschaft, 60287 Frankfurt am Main (DE)
(72) Erfinder: Krause, Helmfried, 63517 Rodenbach (DE); Lansink-Rotgerink, Hermanus G.J., Dr., 63864 Glattbach (DE); Tacke, Thomas, Dr., Paducah, KY 42001 (US); Mangold, Helmut, Dr., 63517 Rodenbach (DE); Riedemann, Heike, 63776 Mömbris (DE); Fuchs, Manfred, 63755 Alzenau (DE)

(57) **Zusammenfassung**

Formkörper auf Basis von pyrogen hergestelltem Mischoxid mit den folgenden physikalisch-chemischen Kenndaten:
- Außendurchmesser: 0,8 - 25 mm
- BET-Oberfläche: 5 - 400 m²/g
- Porenvolumen: 0,2 - 1,8 ml/g
- Bruchfestigkeit: 5 bis 350 N
- Zusammensetzung: Mindestens zwei aus der Gruppe SiO₂, Al₂O₃, TiO₂ und ZrO₂ in jeder beliebigen Kombination jedoch mit Ausnahme von SiO₂-Al₂O₃ Mischoxiden, in denen > 75 Gew.-% SiO₂ vorhanden ist.
- Sonstige Bestandteile: < 1 Gew.-%
- Schüttgewicht: 250 - 1500 g/l
werden hergestellt, indem man pyrogen hergestelltes Mischoxid wahlweise mit einer oder mehreren Verbindungen der Gruppe Methylcellulose, Methylhydroxyethylcellulose, Wachs, Polyethylenglycol Magnesiumstearat oder Aluminiumstearat unter Zusatz von Wasser homogenisiert, bei einer Temperatur von 70 - 150 °C trocknet, gegebenenfalls zu einem Pulver zerkleinert, gegebenenfalls das Pulver zu Formkörpern verpreßt und während eines Zeitraumes von 0,5 bis 10 Stunden bei einer Temperatur von 400 bis 1200 °C tempert.

Diese Formkörper können als Katalysator oder Katalysatorträger bei der Ethylen- und Propylenhydratisierung eingesetzt werden.

## Beschreibung

Die Erfindung betrifft Formkörper auf Basis von pyrogen hergestelltem Mischoxid, ein Verfahren zu ihrer Herstellung und ihre Verwendung als Katalysatorträger oder Katalysator.

Pyrogen hergestellte Oxide zeichnen sich durch extreme Feinteiligkeit und entsprechend hohe spezifische Oberfläche, sehr hohe Reinheit, sphärische Teilchenform und das Fehlen von Poren aus. Aufgrund dieser Eigenschaften finden die pyrogen hergestellten Oxide zunehmend Interesse als Träger für Katalysatoren (D. Koth, H. Ferch, Chem. Ing. Techn. 52, 628 (1980)). In einigen Fällen werden pyrogene Oxide auch als Katalysator eingesetzt.

Da pyrogen hergestellte Oxide besonders feinteilig sind, bereitet die Verformung zu Katalysatorträgern beziehungsweise Katalysatoren einige Schwierigkeiten.

Aus der DE-A 31 32 674 ist ein Verfahren zur Herstellung von Preßlingen aus pyrogen hergestellten Oxiden, bei welchem Kieselsol als Bindemittel verwendet wird, bekannt.

Aus der DE-A 34 06 185 ist ein Verfahren zur Herstellung von Preßlingen, bei welchem man Glasurfrittenpulver als Bindemittel und Glycerin als Gleitmittel verwendet, bekannt.

Aus der DE-A 39 12 504 ist ein Verfahren zur Herstellung von Preßlingen, bei dem man Aluminiumstearat, Magnesiumstearat und/oder Graphit als Gleitmittel und Harnstoff sowie Methylcellulose als Porenbildner verwendet, bekannt.

Diese Preßlinge werden als Aerosil-Tabletten Nr. 350, Firma Degussa, in den Handel gebracht. Sie weisen ca. 0,4 Gew.-% Mg auf.

Formkörper auf Basis pyrogener Oxide sind bekannt. So beschreibt die EP-B 0 393 356 sehr reine Formkörper auf Basis von pyrogen hergestelltem Siliciumdioxid. Diese Formkörper bestehen zu > 99 Gew.-% aus pyrogen hergestelltem SiO₂ und weisen kleine Anteile an Bindermaterialien auf. In den Beispielen wird der Einsatz von Mg- und Al-Stearaten beschrieben.

In der DE-A 196 19 961 werden Formkörper auf Basis von pyrogen hergestelltem Siliciumoxid beschrieben. Die Reinheit dieser Formkörper wurde auf > 99.8 Gew.-% SiO₂ gesteigert.

In den Dokumenten EP-B 0 452 619, EP-B 0 394 677 und EP-B 0 327 723 werden Formkörper auf Basis von pyrogen hergestelltem Titandioxid beschrieben. Diese Formkörper unterscheiden sich unter anderem durch einen Gehalt an Anatas, Rutil, Reinheit, Abmessungen, usw. Die Gehalte an Titandioxid werden mit > 99 Gew.-%, > 99.5 Gew.-% und > 94 Gew.-% angegeben. In dem letzteren Fall beträgt der Gehalt an Anatas mindestens 50 Gew.-%, die restlichen 0-6 Gew.-% bestehen aus nicht pyrogen hergestelltem SiO₂ und/oder nicht pyrogen hergestelltem Al₂O₃.

Formkörper auf Basis pyrogen hergestelltem Al₂O₃ sind in der EP-B 0 327 721 beschrieben. Als Reinheit wird ein Gehalt von 94-99 Gew.-% Al₂O₃ angegeben. Die restlichen 1-6 Gew.-% sind SiO₂. Der SiO₂-Anteil stammt aus Kaolin, das bei der Formgebung des Aluminiumoxidpulvers eingesetzt wird.

Weiterhin sind Formkörper auf Basis pyrogen hergestelltem ZrO₂ bekannt. Diese werden in dem Dokument EP-B 0 327 814 beschrieben. Als Reinheit für diese Materialien wird > 92 Gew.-% Zirkondioxid angegeben. Auch in diesem Fall enthält der Rest Anteile aus nicht pyrogen hergestelltem SiO₂ und Al₂O₃. Weiterhin sind geringe Anteile an HfO₂, welches eine natürliche Verunreinigung in ZrO₂ ist, enthalten.

Die bekannten Formkörper auf Basis pyrogen hergestellter Oxide können als Katalysator oder Katalysatorträger verwendet werden. Die hohe Reinheit und die guten mechanischen und chemischen Eigenschaften spielen bei vielen Anwendungen eine wichtige Rolle.

Es ist weiterhin bekannt, die Zusammensetzung der Formkörper für besondere Anwendungsmöglichkeiten zu ändern, in dem man gezielt bestimmte Fremdelemente hinzufügt. Beispiele hierfür sind in dem Dokument EP-A 0 723 810 beschrieben. Es werden Träger, bestehend aus SiO₂ deren Zusammensetzung durch eine Imprägnierung mit Al, Zr und/oder Ti geändert wurde, erwähnt. Nach der Imprägnierung des Formkörpers fand eine Trocknung sowie eine Kalzinierung statt.

Diese bekannte Herstellmethode ist sehr aufwendig, weil die Modifizierung des Basismaterials durch Imprägnierung, Trocknung und Kalzination einen erheblichen Geräte- und Energieaufwand verlangt. Die Produktionszeiten für modifizierte Formkörper sind zudem deutlich länger.

Es ist bekannt, pyrogene Mischoxide herzustellen, indem man mindestens zwei unterschiedliche Metalle in Form flüchtiger Metallverbindungen, z.B. Chloride, in einer H₂/O₂ Flamme gleichzeitig umsetzt. Ein Beispiel hierfür ist das SiO₂/Al₂O₃-Mischoxid, welches von der Firma Degussa mit der Bezeichnung Aerosil® MOX 170 hergestellt und vertrieben wird. Bei der Herstellung des Aerosil® MOX 170 wird eine Mischung aus SiCl₄ und AlCl₃ direkt in einer Flamme hydrolysiert. Anstelle von oder zusätzlich zu den Chloriden können auch entsprechende Silane, wie z.B. Methyltrichlorsilan, Trichlorsilane, usw. als Rohstoff verwendet werden. (Degussa Technical Bulletin Pigments, No. 11: Basic Characteristics of Aerosil®, S. 37 sowie 11-12; AT-A 195 893; DE-A 952 891; DE-A 25 33 925; DE-A 27 02 896).

Es ist weiterhin bekannt, Formkörper auf Basis von pyrogen hergestelltem Siliciumdioxid-Aluminiumoxid-Mischoxid herzustellen (EP-B 0 327 815). Diese Mischoxide bestehen zu mindestens 75 Gew.-% aus Siliciumdioxid und zu höchstens 25 Gew.-% aus Aluminiumoxid.

Gegenstand der Erfindung sind Formkörper auf Basis von pyrogen hergestelltem Mischoxid mit den folgenden physikalisch-chemischen Kenndaten:
- Außendurchmesser: 0,8 - 25 mm
- BET-Oberfläche: 5 - 400 m²/g
- Porenvolumen: 0,2 - 1,8 ml/g
- Bruchfestigkeit: 5 bis 350 N
- Zusammensetzung: Mindestens zwei aus der Gruppe SiO₂, Al₂O₃, TiO₂ und ZrO₂ in jeder beliebigen Kombination jedoch mit Ausnahme von SiO₂-Al₂O₃ Mischoxiden, in denen > 75 Gew.-% SiO₂ vorhanden ist.
- Sonstige Bestandteile: < 1 Gew.-%
- Schüttgewicht: 250 - 1500 g/l

Die erfindungsgemäßen Formkörper können als Strangpreßlinge, Extrudate oder Tabletten vorliegen. Sie können in Form von Zylindern, Zylinder mit abgerundeten Stirnflächen, Kugeln, Ringe, Wagenräder, Minilithe oder in anderen für Festbettkatalysatoren üblichen Formen vorliegen.

Ein weiterer Gegenstand der Erfindung ist ein Verfahren zur Herstellung von Formkörpern auf Basis von pyrogen hergestelltem Mischoxid mit folgenden physikalisch-chemischen Kenndaten:
- Außendurchmesser: 0,8 - 25 mm
- BET-Oberfläche: 5 - 400 m²/g
- Porenvolumen: 0,2 - 1,8 ml/g
- Bruchfestigkeit: 5 - 350 N
- Zusammensetzung: Mindestens zwei aus der Gruppe SiO₂, Al₂O₃, TiO₂ und ZrO₂ in jeder beliebigen Kombination jedoch mit Ausnahme von SiO₂-Al₂O₃ Mischoxiden, in denen > 75 Gew.-% SiO₂ vorhanden ist.
- Sonstige Bestandteile: < 1 Gew.-%
- Schüttgewicht: 250 - 1500 g/l,
welches dadurch gekennzeichnet ist, daß man pyrogen hergestelltes Mischoxid wahlweise mit einer oder mehreren Verbindungen der Gruppe Methylcellulose, Methylhydroxyethylcellulose, Wachs, Magnesiumstearat, Aluminiumstearat oder Polyethylenglycol unter Zusatz von Wasser homogenisiert, bei einer Temperatur von 70 - 150 °C trocknet, gegebenenfalls zu einem Pulver zerkleinert, das Pulver zu Formkörper verpreßt und während eines Zeitraumes von 0,5 bis 10 Stunden bei einer Temperatur von 400 bis 1200 °C tempert.

Die Herstellung der Formkörper kann auf Stempelpressen, Exzenterpressen, isostatischen Pressen, Strangpressen, Rundlaufpressen oder Kompaktoren erfolgen.

Vor dem Verpressen kann in einer besonderen Ausführungsform der Erfindung die Mischung die folgende Zusammensetzung aufweisen:
- 50 - 90 Gew.-%: Mischoxid
- 0,1 - 20 Gew.-%: Methylhydroxyethylcellulose, vorzugsweise 5 - 15 Gew.-%
- 0,1 - 15 %: Wachs, vorzugsweise 5 - 12 Gew.-%
- 0,1 - 15 %: Polyethylenglykol, vorzugsweise 5 - 10 Gew.-%

Durch Variation der Einsatzstoffmengen und des Preßdruckes können die Bruchfestigkeit, die spezifische Gesamtoberfläche und das Porenvolumen in einem gewissen Rahmen eingestellt werden.

Ein weiterer Gegenstand der Erfindung ist ein Verfahren zur Herstellung von Formkörpern auf Basis von pyrogen hergestelltem Mischoxid mit folgenden physikalisch-chemischen Kenndaten:
- Außendurchmesser: 0,8 - 25 mm
- BET-Oberfläche: 5 - 400 m²/g
- Porenvolumen: 0,2 - 1,8 ml/g
- Bruchfestigkeit: 5 - 350 N
- Zusammensetzung: Mindestens zwei aus der Gruppe SiO₂, Al₂O₃, TiO₂ und ZrO₂ in jeder beliebigen Kombination jedoch mit Ausnahme von SiO₂-Al₂O₃ Mischoxiden in denen > 75 Gew.-% SiO₂ vorhanden ist.
- Sonstige Bestandteile: < 1 Gew.-%
- Schüttgewicht: 250 - 1500 g/l
welches dadurch gekennzeichnet ist, daß man pyrogen hergestelltes Mischoxid wahlweise mit einer oder mehreren Verbindungen der Gruppe Methylcellulose, Methylhydroxyethylcellulose, Wachs, Magnesiumstearat, Aluminiumstearat oder Polyethylenglycol unter Zusatz von Wasser homogenisiert, einem Knet- und Formgebungsverfahren unterzieht, extrudiert, die Extrudate gegebenfalls mittels einer Schneidevorrichtung auf die gewünschte Länge schneidet, bei einer Temperatur von 70 - 150 °C trocknet und während eines Zeitraumes von 0,5 bis 10 Stunden bei einer Temperatur von 400 bis 1200 °C tempert.

Zur Durchführung der erfindungsgemäßen Verfahren sind alle Mischer oder Mühlen, die eine gute Homogenisierung ermöglichen, wie zum Beispiel Schaufel-, Wirbelschicht-, Kreisel- oder Luftstrommischer, geeignet. Besonders geeignet sind Mischer, mit denen eine zusätzliche Verdichtung des Mischgutes möglich ist, wie zum Beispiel Pflugscharmischer, Kollergänge oder Kugelmühlen. Die Mischung und Knetung kann aber auch direkt in einem Extruder erfolgen. Die Herstellung der Extrudate kann auf Ein- oder Zweischneckenextrudern, Strangpressen als auch auf Kompaktoren erfolgen.

Nach dem Homogenisieren kann eine weitgehende Trocknung bei 70 - 150 °C erfolgen, so daß man nach gegebenenfalls durchgeführtem Zerkleinern ein rieselfähiges Pulver erhält.

Die erfindungsgemäßen Formkörper können entweder direkt als Katalysator oder als Katalysatorträger eingesetzt werden. In dem letzten Fall können die Formkörper nach ihrer Herstellung mit einer katalytisch wirksamen Substanz in Kontakt gebracht und gegebenenfalls durch eine geeignete Nachbehandlung aktiviert werden.

Insbesondere können die Formkörper aus dem erfindungsgemäßen pyrogen hergestellten Mischoxid als Katalysatorträger im Olefinhydratisierungsverfahren verwendet werden.

Die erfindungsgemäßen Formkörper weisen die folgenden Vorteile auf:

Gegenüber den Formkörpern gemäß den Dokumenten EP 0 723 810 A1 und EP 0 792 859 A2 ist die Herstellung der erfindungsgemäßen Formkörpern wesentlich einfacher und erfordert weniger Aufwand bezüglich Energie, Zeit und Geräte.

Die erfindungsgemäßen Formkörper weisen eine verbesserte hydrothermale Stabilität bei Hydratisierungsverfahren auf.

Katalysatoren unterliegen im Betrieb einer Alterung, die sich durch eine Verringerung der Aktivität und/oder Selektivität bemerkbar macht. Die Desaktivierung beruht häufig auf einer durch hohe Temperaturen verursachten Verringerung der spezifischen Oberfläche des Trägers.

Die spezifische Oberfläche des Trägers ist eng mit seiner Porenstruktur verbunden. Darüber hinaus weisen hochoberflächige Feststoffe meist eine vollständig amorphe oder überwiegend amorphe Struktur auf, welche das Bestreben hat, unter Kristallitwachstum und Verringerung der spezifischen Oberfläche in einen thermodynamisch stabilen Zustand überzugehen.

Es hat sich gezeigt, daß auch Siliciumdioxid enthaltende bekannte Katalysatorträger einer solchen Alterung unterliegen. Die Bedingungen der Hydratisierung beschleunigen die Alterung. Weiterhin ist es bekannt, daß auch Verunreinigungen, insbesondere durch Alkalimetalle, die Alterung von Siliziumdioxid enthaltenden Trägern unter hydrothermalen Bedingungen fördern (siehe zum Beispiel R.K. Iler in "The Chemistry of Silica", Seite 544, John Wiley & Sons (1979)).

Auch die in der EP 0 393 356 beschriebenen Katalysatorträger auf Basis von pyrogen hergestelltem Siliziumdioxid unterliegen unter hydrothermalen Bedingungen einer Alterung, wobei kleine Poren zu größeren Poren unter Verlust von spezifischer Oberfläche zusammenwachsen. Das Porenvolumen ändert sich dabei anfänglich kaum.

Wie in EP 0 792 859 A2 beschrieben, kann man die Alterungsstabilität durch den Zusatz von Ti und/oder Zr steigern. In dieser Patentschrift werden diese Elemente durch Imprägnierung auf einem SiO₂ Formkörper aufgebracht, anschließend getrocknet und kalziniert. Wie bereits oben erläutert, erfordern diese zusätzliche Schritte Zeit, Energie und Geräte.

Aufgabe der vorliegenden Erfindung ist es daher, Katalysatorträger anzugeben, welche bei Verwendung unter hydrothermalen Bedingungen eine verbesserte Alterungsstabilität aufweisen.

Die Aufgabe der Stabilisierung wird besser gelöst durch die Verwendung von Katalysatoren, welche eine Aktivkomponente auf einem dem erfindungsgemäßen Formkörper auf Basis eines pyrogenen Mischoxids aufweisen.

Gegenstand der Erfindung ist weiterhin ein Verfahren zur Hydratisierung von Olefinen zu den entsprechenden Alkoholen in Gegenwart von Phosphorsäure oder einer anderen Aktivkomponente, zum Beispiel eine Heteropolysäure, als Katalysator auf dem erfindungsgemäßen Formkörper auf Basis von pyrogen hergestelltem Mischoxid.

Ein Verfahren, bei dem der erfindungsgemäße Formkörper auf Basis von pyrogen hergestelltem Mischoxid eingesetzt werden kann, wird zum Beispiel in dem Dokument EP-A 0 578 441 beschrieben. Nach diesem Verfahren wird Wasser und Ethylen bei Temperaturen zwischen 225 und 280°C und Drucken zwischen 20 und 240 bar zu Ethanol umgesetzt. Dabei wird ein Wasser/Ethylen-Molverhältnis im Bereich von 0,15 bis 0,5 angewendet. Die Katalysatorbelastung, gemessen in Gramm Wasser/Ethylen-Gemisch pro Minute und Milliliter Katalysator, kann im Bereich von 0,01 bis 0,1 g/(min × ml) gewählt werden. Als Nebenprodukt wird bei dieser Reaktion Diethylether gebildet.

Die Herstellung von Isopropanol durch Hydratisierung von Propylen erfolgt unter ähnlichen Bedingungen, jedoch bei etwas verringerter Temperatur im Bereich zwischen 180 und 225°C. Als Nebenprodukt entsteht bei dieser Reaktion n-Propanol.

Als bekannte Katalysatorträger für die Aktivkomponente Phosphorsäure werden gemäß EP 0 578 441 A2 Pellets aus synthetischem Siliziumdioxid mit hoher Bruchfestigkeit, hoher Porosität und geringen metallischen Verunreinigungen eingesetzt.

Die erfindungsgemäße Verwendung ist besonders vorteilhaft für die Hydratisierung von Olefinen. Die Stabilisierung des Trägers ist jedoch auch bei anderen katalytischen Umsetzungen unter hydrothermalen Bedingungen günstig.

Im Falle der Hydratisierung von Olefinen wird Phosphorsäure als Aktivkomponente auf den Katalysatorträger aufgebracht. Hierzu wird der Träger in eine wäßrige Lösung von Phosphorsäure getaucht und mit dieser getränkt. Zur Anwendung kommen hierbei Phosphorsäurelösungen mit 15 bis 85 Gew.-% Phosphorsäure, bezogen auf das Gesamtgewicht der Lösung.

Ein Hauptanwendungsgebiet der Hydratisierung von Olefinen ist die Hydratisierung von Ethylen zur Herstellung von Ethanol und Diethylether sowie die Hydratisierung von Propylen zur Herstellung von Isopropanol. Es werden dabei die aus dem Stand der Technik bekannten Reaktionsbedingungen angewendet.

Eine weitere Aufgabe der vorliegenden Erfindung ist es, einen Katalysator anzugeben, welcher bei Verwendung unter hydrothermalen Bedingungen eine verbesserte Alterungsstabilität aufweist.

Diese Aufgabe wird durch einen Phosphorsäurekatalysator gelöst, welcher auf einem erfindungsgemäßen Formkörper 1 bis 50 Gew.-% H₃PO₄ bezogen auf das Gesamtgewicht des Katalysators enthält. Er ist dadurch gekennzeichnet, daß der Formkörper auf Basis von pyrogen hergestelltem Mischoxid folgenden physikalisch-chemischen Kenndaten aufweist:
- Außendurchmesser: 0,8 - 25 mm
- BET-Oberfläche: 5 - 400 m²/g
- Porenvolumen: 0,2 - 1,8 ml/g
- Bruchfestigkeit: 5 bis 350 N
- Zusammensetzung: Mindestens zwei aus der Gruppe SiO₂, Al₂O₃, TiO₂ und ZrO₂ in jeder beliebigen Kombination jedoch mit Ausnahme von SiO₂-Al₂O₃ Mischoxiden in denen > 75 Gew.-% SiO₂ vorhanden ist.
- Sonstige Bestandteile: < 1 Gew.-%
- Schüttgewicht: 250 - 1500 g/l

Zur Herstellung der erfindungsgemäßen Katalysatoren werden die Formkörper mit Phosphorsäure als Aktivkomponente belegt. Hierzu werden die Trägerteilchen beziehungsweise Formkörper in eine wäßrige Lösung von Phosphorsäure getaucht und mit dieser getränkt, wodurch sich das Porenvolumen der Trägerteilchen mit der Lösung der Phosphorsäure füllt. Zur Anwendung kommen hierbei Phosphorsäurelösungen mit 15 bis 85 Gew.-% Phosphorsäure bezogen auf das Gesamtgewicht der Lösung. Anhängig vom jeweiligen Porenvolumen der Trägerteilchen können sie auf diese Weise mit 1 bis 50 Gew.-% H₃PO₄, bezogen auf das Gesamtgewicht des fertigen Katalysators, belegt werden.

Zur Herstellung von Mischoxiden wird in eine Knallgasflamme aus Wasserstoff und Luft flüchtige Metallverbindungen eingedüst. Diese Metallverbindungen hydrolysieren unter dem Einfluß des bei der Knallgasreaktion entstehenden Wassers zu Metalloxiden und Salzsäure. Das Metalloxid tritt nach dem Verlassen der Flamme in eine sogenannte Koagulationszone ein, in der die Mischoxid-Primärteilchen und -Primäraggregate agglomerieren. Das in diesem Stadium als eine Art Aerosol vorliegende Produkt wird in Zyklonen von den gasförmigen Begleitsubstanzen getrennt und anschließend mit feuchter Heißluft nachbehandelt. Durch dieses Verfahren läßt sich der Rest-Salzsäuregehalt unter 0,025 % senken. Da das Mischoxid am Ende dieses Prozesses mit einer Schüttdichte von nur ca. 15 g/l anfällt, kann eine Vakuumverdichtung, mit der sich Stampfdichten von ca. 50 g/l und mehr einstellen lassen, angeschlossen werden.

Die Teilchengrößen der auf diese Weise gewonnenen Produkte können mit Hilfe der Reaktionsbedingungen, wie zum Beispiel die Flammentemperatur, der Wasserstoff- oder Sauerstoffanteil, die Metallchloridsubstanzen und -menge, die Verweilzeit in der Flamme oder die Länge der Koagulationsstrecke, variiert werden.

Die BET-Oberfläche wird gemäß DIN 66 131 mit Stickstoff bestimmt. Das Porenvolumen wird rechnerisch aus der Summe von Mikro-, Meso- und Makroporenvolumen bestimmt. Die Bruchfestigkeit wird mittels des Bruchfestigkeitstesters der Firma Erweka, Typ TBH 28, bestimmt.

Die Bestimmung der Mikro- und Mesoporen erfolgt durch Aufnahme einer N₂-Isotherme und deren Auswertung nach BET, de Boer und Barret, Joyner, Halenda.

Die Bestimmung der Schüttdichte erfolgt auf übliche und dem Fachmann bekannte Art und Weise.

Die Bestimmung der Makroporen erfolgt durch das Hg-Einpreßverfahren.

### Beispiel 1

- 71.4 Gew.-%: pyrogenes SiO₂-TiO₂ Mischoxid (70 Gew.-% SiO₂, 30 Gew.-% TiO₂)
- 12.9 Gew.-%: Methylhydroxyethylcellulose
- 7.1 Gew.-%: Wachs
- 8.6 Gew.-%: Polyethylenglycol
werden unter Zusatz von Wasser kompaktiert, bei 90 °C getrocknet, zu einem rieselfähigen Pulver zerkleinert und mit einer Excenterpresse zu Formkörpern verformt. Die Rohtabletten werden 6 Stunden bei 750 °C kalziniert.

### Beispiel 2

- 71.4 Gew.-%: pyrogenes SiO₂-TiO₂ Mischoxid (82 Gew.-% SiO₂, 18 Gew.-% TiO₂)
- 12.9 Gew.-%: Methylhydroxyethylcellulose
- 7.1 Gew.-%: Wachs
- 8.6 Gew.-%: Polyethylenglycol
werden unter Zusatz von Wasser kompaktiert, bei 100 °C getrocknet, zu einem rieselfähigen Pulver zerkleinert und mit einer Excenterpresse zu Formkörpern verformt. Die Rohtabletten werden 6 Stunden bei 700 °C kalziniert.

### Beispiel 3

- 71.4 Gew.-%: pyrogenes SiO₂-TiO₂ Mischoxid (91 Gew.-% SiO₂, 9 Gew.-% TiO₂)
- 12.9 Gew.-%: Methylhydroxyethylcellulose
- 7.1 Gew.-%: Wachs
- 8.6 Gew.-%: Polyethylenglycol
werden unter Zusatz von Wasser kompaktiert, bei 100 °C getrocknet, zu einem rieselfähigen Pulver zerkleinert und mit einer Excenterpresse zu Formkörpern verformt. Die Rohtabletten werden 10 Stunden bei 600 °C kalziniert.

### Beispiel 4

- 71.4 Gew.-%: pyrogenes SiO₂-TiO₂ Mischoxid (91 Gew.-% SiO₂, 9 Gew.-% TiO₂)
- 12.9 Gew.-%: Methylhydroxyethylcellulose
- 7.1 Gew.-%: Wachs
- 8.6 Gew.-%: Polyethylenglycol
werden unter Zusatz von Wasser kompaktiert, bei 100 °C getrocknet, zu einem rieselfähigen Pulver zerkleinert und mit einer Excenterpresse zu Formkörpern verformt. Die Rohtabletten werden 6 Stunden bei 750 °C kalziniert.

### Beispiel 5

- 90.0 Gew.-%: pyrogenes TiO₂-ZrO₂ Mischoxid (94 Gew.-% TiO₂, 6 Gew.-% ZrO₂)
- 5.0 Gew.-%: Methylhydroxyethylcellulose
- 2.0 Gew.-%: Wachs
- 3.0 Gew.-%: Polyethylenglycol
werden unter Zusatz von Wasser kompaktiert, bei 100 °C getrocknet, zu einem rieselfähigen Pulver zerkleinert und mit einer Excenterpresse zu Formkörpern verformt. Die Rohtabletten werden 10 Stunden bei 400 °C kalziniert.

### Beispiel 6

- 92.6 Gew.-%: pyrogenes TiO₂-ZrO₂ Mischoxid (94 Gew.-% TiO₂, 6 Gew.-% ZrO₂)
- 0.9 Gew.-%: Methylhydroxyethylcellulose
- 6.5 Gew.-%: Wachs
werden unter Zusatz von Wasser kompaktiert, bei 100 °C getrocknet, zu einem rieselfähigen Pulver zerkleinert und mit einer Excenterpresse zu Formkörpern verformt. Die Rohtabletten werden 10 Stunden bei 400 °C kalziniert.

Die gemäß den Beispielen 1 - 6 erhaltenen Formkörper weisen folgende physikalisch-chemische Kenndaten auf:

| **Beispiel** | **1** | **2** | **3** | **4** | **5** | **6** |
|---|---|---|---|---|---|---|
| Tablettenform | Zylinder | Zylinder | Zylinder | Zylinder | Ringe | Ringe |
| Außendurchmesser x Höhe x Innendurchmesser (mm) | 5x5 | 6x5.5 | 6x5.5 | 5x5 | 8x5x3 | 8x5x3 |
| BET-Oberfläche (m²/g) | 86 | 101 | 209 | 191 | 44 | 46 |
| Porenvolumen (ml/g) | 0.69 | 0.59 | 0.83 | 0.72 | 0.34 | 0.42 |
| Bruchfestigkeit (N) | 21 | 34 | 37 | 66 | 15 | 12 |
| Schüttgewicht (g/l) | n.b. | 610 | 505 | n.b. | 860 | 800 |

### Untersuchungen zur Alterungsstabilität der erfindungsgemäßen Katalysatoren:

Zur Untersuchung der Alterungsstabilität der erfindungsgemäßen Katalysatoren und von einem Vergleichskatalysator gemäß dem Stand der Technik unter hydrothermalen Bedingungen wird die Porenstruktur der gealterten Katalysatoren, d.h. nach Tränken der Träger mit Phosphorsäure und hydrothermaler Alterung, ermittelt. Die Bestimmung der Porenstruktur erfolgt mit Hilfe der Quecksilberporosimetrie. Die ungealterten Katalysatoren (erfindungsgemäße und Vergleichskatalysatoren) haben Poren zwischen 0.01 und 0.05 µm.

Es zeigen
- Figur 1: Porenverteilung eines gealterten Katalysators auf dem erfindungsgemäßen Formkörper gemäß Beispiel 1
- Figur 2: Porenverteilung eines gealterten Katalysators auf dem erfindungsgemäßen Formkörper gemäß Beispiel 2
- Figur 3: Porenverteilung eines gealterten Katalysators auf dem erfindungsgemäßen Formkörper gemäß Beispiel 3
- Figur 4: Porenverteilung eines gealterten Katalysators auf dem nicht erfindungsgemäßen Formkörper gemäß Beispiel 8

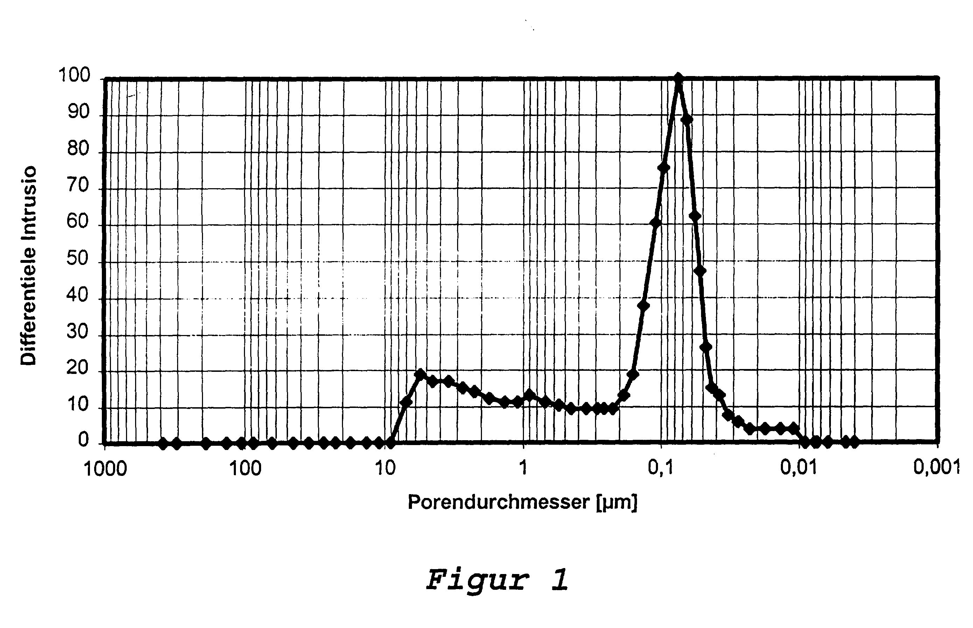

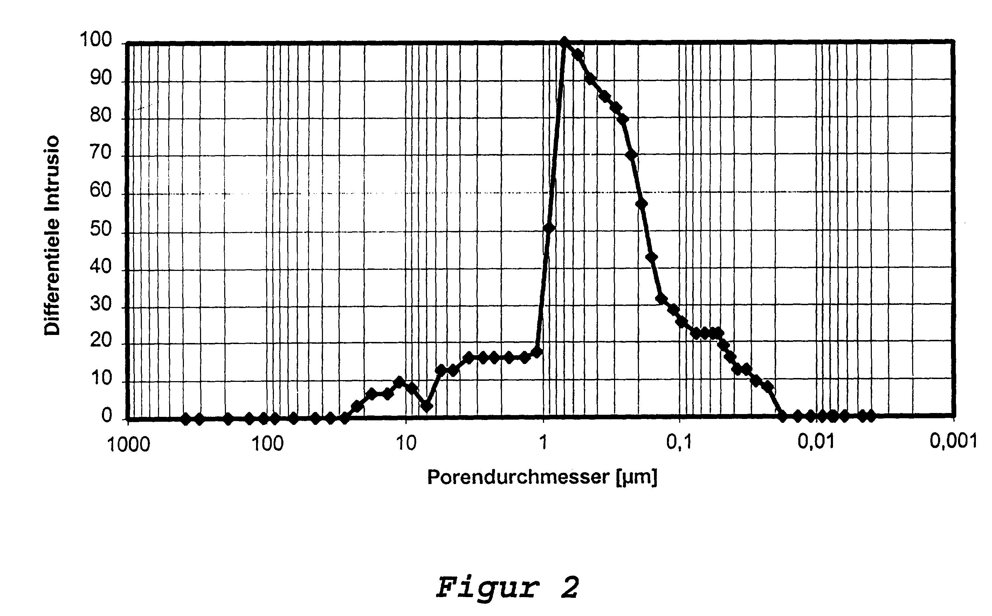

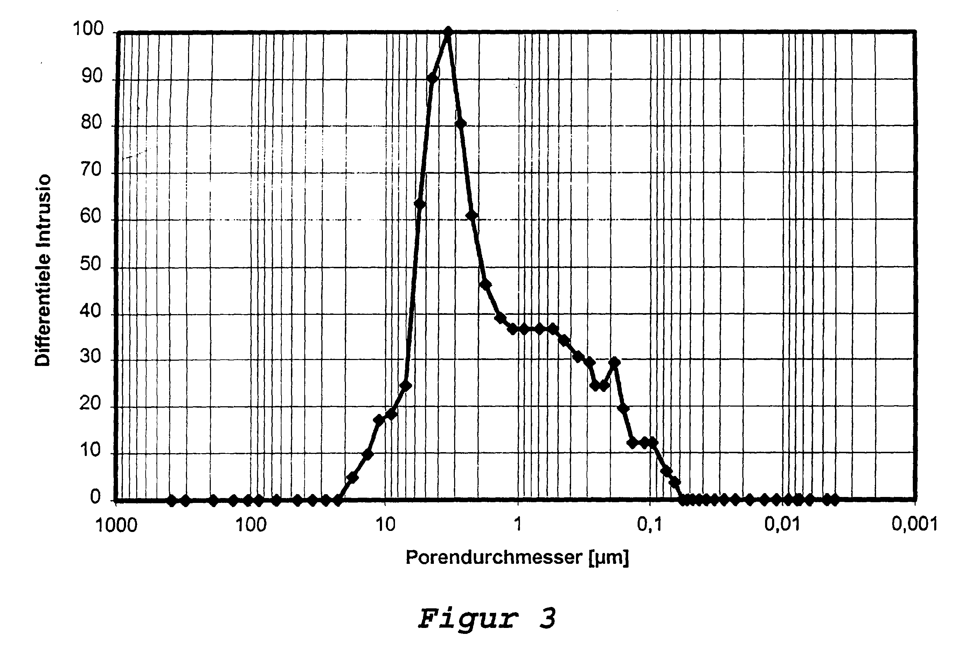

Die in den Figuren 1 bis 4 gezeigten Porenverteilungskurven geben die differentielle Eindringung (Intrusion) des Quecksilbers in Abhängigkeit vom Porendurchmesser wieder. Für die differentielle Intrusion werden willkürliche Einheiten gewählt und die Kurven jeweils über den zur Verfügung stehenden Diagrammbereich gedehnt.

### Beispiel 7

Die Katalysatorträger aus den Beispielen 1, 2 und 3 werden jeweils in einer 60 Gew.-% H₃PO₄-Lösung getaucht und anschließend in 40 Stunden in einer Hochdruckanlage einem Wasserdampfdruck von 15 bar und 350°C belassen. Die Porenverteilung des gealterten Katalysatoren wird mit der Hg-Porosimetrie bestimmt.

Das Ergebnis ist in den Figuren 1 bis 3 grafisch dargestellt. Wie daraus zu ersehen ist, hat eine Vergrößerung der Poren stattgefunden, denn, wie oben beschrieben, das nicht gealterte Material hat Poren im Bereich 0.01 bis 0.05 µm.

### Beispiel 8 (Vergleichsbeispiel)

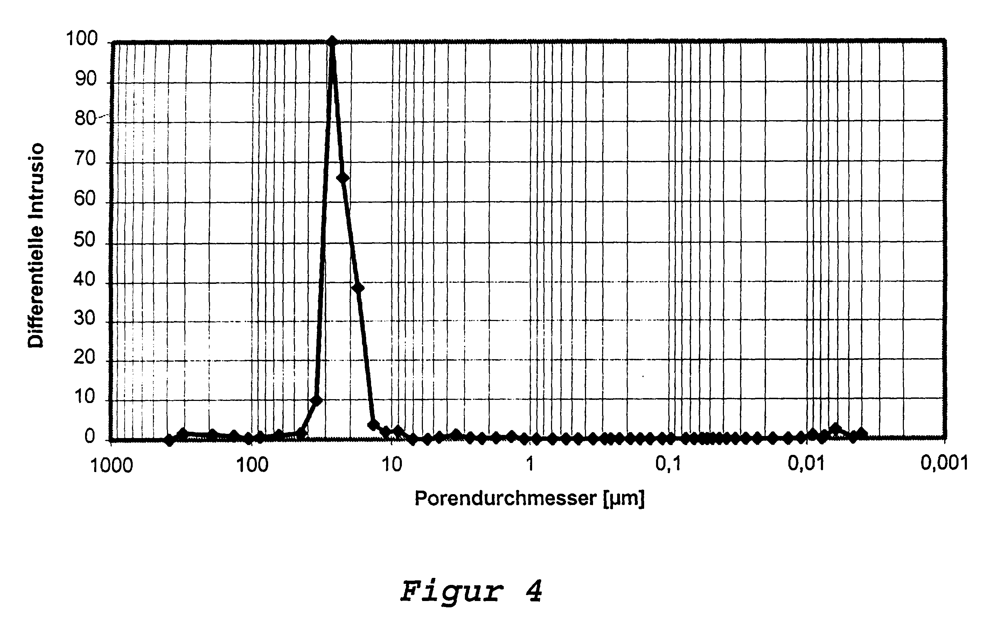

Ein bekannter Preßling (Katalysatorträger 350, Firma Degussa, mit 0,4 Gew.-% Mg (elementar), BET-Oberfläche 180 m²/g, Schüttdichte 490 g/l, gesamtes Porenvolumen 0,8 cm³/g, Tabletten von 6 mm Durchmesser und 5,5 mm Höhe) wird mit Phosphorsäure (60 Gew.-%) beladen und 41 Stunden in einer Hochdruckanlage bei einem Wasserdampfdruck von 15 bar und auf 350 °C belassen. Die Porenverteilung des gealterten Katalysators wird mit der Hg-Porosimetrie bestimmt. Die gemessene Porenverteilung ist in Figur 4 grafisch dargestellt.

Die hydrothermal gealterten Träger weisen ein Maximum der Porenverteilung bei Porendurchmessern zwischen 20 und 30 µm auf. Den Anteil an Poren mit einem Durchmesser kleiner als 10 µm ist viel geringer, als bei den erfindungsgemäßen Materialien in den Figuren 1 bis 3. Die erfindungsgemäßen Materialien sind also deutlich stabiler gegenüber hydrothermaler Alterung.

## Patentansprüche

1. Formkörper auf Basis von pyrogen hergestelltem Mischoxid mit den folgenden physikalisch-chemischen Kenndaten:
Außendurchmesser 0,8 - 25 mm
BET-Oberfläche 5 - 400 m²/g
Porenvolumen 0,2 - 1,8 ml/g
Bruchfestigkeit 5 bis 350 N
Zusammensetzung Mindestens zwei aus der Gruppe SiO₂, Al₂O₃, TiO₂ und ZrO₂ in jeder beliebigen Kombination jedoch mit Ausnahme von SiO₂-Al₂O₃ Mischoxiden, in denen > 75 Gew.-% SiO₂ vorhanden ist.
Sonstige Bestandteile < 1 Gew.-%
Schüttgewicht 250 - 1500 g/l

2. Verfahren zur Herstellung von Formkörpern gemäß Anspruch 1 auf Basis von pyrogen hergestelltem Mischoxid mit folgenden physikalisch-chemischen Kenndaten:
Außendurchmesser 0,8 - 25 mm
BET-Oberfläche 5 - 400 m²/g
Porenvolumen 0,2 - 1,8 ml/g
Bruchfestigkeit 5 bis 350 N
Zusammensetzung Mindestens zwei aus der Gruppe SiO₂, Al₂O₃, TiO₂ und ZrO₂ in jeder beliebigen Kombination jedoch mit Ausnahme von SiO₂-Al₂O₃ Mischoxiden, in denen > 75 Gew.-% SiO₂ vorhanden ist.
Sonstige Bestandteile < 1 Gew.-%
Schüttgewicht 250 - 1500 g/l
dadurch gekennzeichnet, daß man pyrogen hergestelltes Mischoxid wahlweise mit einer oder mehreren Verbindungen der Gruppe Methylcellulose, Methylhydroxyethylcellulose, Wachs, Polyethylenglycol, Magnesiumstearat oder Aluminiumstearat unter Zusatz von Wasser homogenisiert, bei einer Temperatur von 70 - 150 °C trocknet, gegebenenfalls zu einem Pulver zerkleinert, das Pulver zu Formkörpern verpreßt und während eines Zeitraumes von 0,5 bis 10 Stunden bei einer Temperatur von 400 bis 1200 °C tempert.

3. Verfahren zur Herstellung von Formkörpern gemäß Anspruch 1 auf Basis von pyrogen hergestelltem Mischoxid mit folgenden physikalisch-chemischen Kenndaten:
Außendurchmesser 0,8 - 25 mm
BET-Oberfläche 5 - 400 m²/g
Porenvolumen 0,2 - 1,8 ml/g
Bruchfestigkeit 5 bis 350 N
Zusammensetzung Mindestens zwei aus der Gruppe SiO₂, Al₂O₃, TiO₂ und ZrO₂ in jeder beliebigen Kombination jedoch mit Ausnahme von SiO₂-Al₂O₃ Mischoxiden, in denen > 75 Gew.-% SiO₂ vorhanden ist.
Sonstige Bestandteile < 1 Gew.-%
Schüttgewicht 250 - 1500 g/l
dadurch gekennzeichnet, daß man pyrogen hergestelltes Mischoxid wahlweise mit einer oder mehreren Verbindungen der Gruppe Methylcellulose, Methylhydroxyethylcellulose, Wachs, Polyethylenglycol, Magnesiumstearat oder Aluminiumstearat unter Zusatz von Wasser homogenisiert, einem Knet- und Verformungsverfahren unterzieht, extrudiert, die Extrudate gegebenenfalls auf eine gewünschte Länge schneidet oder bricht, bei einer Temperatur von 70 - 150 °C trocknet und während eines Zeitraums von 0.5 bis 10 Stunden bei einer Temperatur von 400 bis 1200°C tempert.

4. Verwendung der Formkörper gemäß Anspruch 1 als Katalysator oder Katalysatorträger.

5. Phosphorsäurekatalysator, welcher auf einem geformten, anorganischen Träger 1 bis 50 Gew.-% H₃PO₄ bezogen auf das Gesamtgewicht des Katalysators enthält, dadurch gekennzeichnet, daß der Träger aus einem Formkörper gemäß Anspruch 1 besteht.

6. Verwendung von Katalysatoren, welche eine Aktivkomponente enthalten, die auf einem Formkörper gemäß Anspruch 1 aufgebracht ist, für katalytische Umsetzungen unter hydrothermalen Bedingungen.

7. Verwendung nach Anspruch 6 für die Hydratisierung von Olefinen.

8. Verwendung nach Anspruch 7, dadurch gekennzeichnet, daß als Aktivkomponente Phosphorsäure verwendet wird.

9. Verwendung nach Anspruch 7, dadurch gekennzeichnet, daß als Aktivkomponente eine Heteropolysäure aufgebracht ist.

10. Verwendung nach Anspruch 8 oder 9 für die Hydratisierung von Ethylen zur Herstellung von Ethanol und Diethylether.

11. Verwendung nach Anspruch 8 oder 9 für die Hydratisierung von Propylen zur Herstellung von Isopropanol.
